# EUROPÄISCHE PATENTSCHRIFT

(11) **EP 4 359 255 B1**
(45) Veröffentlichungstag und Bekanntmachung des Hinweises auf die Patenterteilung: **10.12.2025**
(21) Anmeldenummer: 22732523.0
(22) Anmeldetag: 10.06.2022
(51) Int. Cl.: B60N 2/90, B60N 3/06

(54) **FAHRZEUGSITZ MIT EINER FUSSSTÜTZE**
VEHICLE SEAT HAVING A FOOTREST
SIÈGE DE VÉHICULE COMPORTANT UN REPOSE-PIEDS

(30) Priorität: 24.06.2021 DE 102021116347
(43) Veröffentlichungstag der Anmeldung: 01.05.2024
(73) Patentinhaber: Bayerische Motoren Werke Aktiengesellschaft, 80809 München (DE)
(72) Erfinder: LENG, Michael, 82269 Geltendorf (DE)
(86) Internationale Anmeldenummer: PCT/EP2022/065781
(87) Internationale Veröffentlichungsnummer: WO 2022/268523

(56) Entgegenhaltungen:
- DE-A1- 102010 030 553
- DE-U1- 8 708 102

## Beschreibung

Die Erfindung betrifft einen Fahrzeugsitz mit einer Fußstütze nach dem Oberbegriff des Patentanspruchs 1. Sie betrifft weiter ein Fahrzeug, insbesondere ein Kraftfahrzeug, mit zumindest einem derartigen Fahrzeugsitz.

Der zunehmende Komfort in Fahrzeugen, insbesondere in Kraftfahrzeugen, lässt den Wunsch nach Ruhe- und Liegesitzen mit Fußstützen aufkommen. Insbesondere in künftigen autonom fahrenden Kraftfahrzeugen werden die Fahrzeugpassagiere die Reisezeit im Fahrzeug zur Erholung und Entspannung nutzen können und das Vorhandensein derartiger Komfortsitze erwarten. Ein maximaler Komfort wird beim Auflegen der Beine erreicht, wenn die Füße aufgelegt werden können. Erfolgt die Auflage hingegen nur im Bereich der Wade, kann es schnell zu Ermüdungserscheinungen kommen. Meistens reichen die Verstellwege einer unmittelbar am Sitzunterteil angeordneten Auflage nicht aus, um die für das Auflegen der Füße erforderliche Position zu erreichen oder die Betätigungskinematik muss sehr massiv ausgeführt werden, was zu deutlichen Mehrkosten und zu Mehrgewicht führen würde.

Aus der DE 10 2010 012 767 A1 ist ein Fahrzeugsitz mit einer Fußstütze bekannt, die eine vor dem Fahrzeugsitz angeordnete und gegenüber dem Fahrzeugboden bewegliche Auflageplatte für die Füße eines auf dem Fahrzeugsitz sitzenden Passagiers aufweist. Die Auflageplatte ist um eine an deren sitzseitigem Ende gelegene Querachse mit dem sitzabgewandten Ende nach oben neigbar. An den Längsseiten der Auflageplatte ist ein Schlitten verschiebbar geführt, der über ein flexibles Auflageelement für die Unterschenkel des Passagiers mit dem Fahrzeugsitz verbunden ist.

Aus der DE 10 2005 013 170 A1 ist eine Stützplatten für die Unterschenkel eines auf einem Fahrzeugsitz sitzenden Passagiers aufweisende Fußauflage für ein Fahrzeug bekannt, die vor dem Fahrzeugsitz angeordnet ist und aus einer vertikalen Aufbewahrungsstellung unter der Vorderkante des Fahrzeugsitzes in eine horizontale Stützstellung herausschwenkbar, in der die Stützplatten teleskopartig ausfahrbar sind.

Die DE 10 2004 050 730A1 zeigt und beschreibt eine Fahrzeugsitzanordnung mit hintereinander angeordneten Fahrzeugsitzen in einem Luftfahrzeug, wobei ein unter einem Vordersitz angeordnetes flexibles und rolloartig nach hinten ausziehbares Abstützteil an dem Sitzboden eines dahinter gelegenen Sitzes anbringbar ist und im dort angebrachten Zustand eine Auflage für die Füße und Unterschenkel eines auf dem hinteren Sitz sitzenden Passagiers bildet.

Die FR 2 906 770 A1 zeigt und beschreibt einen Fahrzeugsitz mit einer Fußstütze, die aus einer Verstauposition unter dem Fahrzeugsitz mittels einer unter dem Sitz angeordneten Schienenanordnung teleskopartig nach vorne herausschiebbar und um eine Querachse neigbar ist.

Die DE 10 2010 030 553 A1 und die DE 87 08 102 U1 zeigen jeweils einen Fahrzeugsitz mit einer Beinauflage, die im Nichtgebrauchszustand in einer Verstauposition unter dem Fahrzeugsitz angeordnet ist und die für den Gebrauch nach vorne in eine Einsatzposition herausgefahren wird. Im herausgefahrenen Zustand schwebt die Beinauflage vor dem Fahrzeugsitz und die auf die Beinauflage einwirkenden Gewichtskräfte werden durch die Betätigungsmechanik abgestützt und unter dem Fahrzeugsitz in die Sitzstruktur und in die Fahrzeugstruktur eingeleitet. Die Hebel und Gelenke der Betätigungsmechanik müssen daher für die Übertragung hoher Biegemomente besonders stabil ausgelegt werden.

Aufgabe der vorliegenden Erfindung ist es, einen verbesserten Fahrzeugsitz mit einer Fußstütze anzugeben, die gewichtsoptimiert ist und die bei Nichtgebrauch platzsparend unter dem Fahrzeugsitz verstaubar ist.

Diese Aufgabe wird gelöst mit den Merkmalen des Patentanspruchs 1.

Bei einem diese Aufgabe lösenden Fahrzeugsitz mit einer Fußstütze, einem eine Sitzfläche aufweisenden Sitzunterteil, das, vorzugsweise längsverschiebbar, mit einer Fahrzeugstruktur koppelbar oder gekoppelt ist, und einer eine Lehnenfläche aufweisenden Sitzlehne, wobei die mit einer Auflagefläche versehene Fußstütze mittels einer Betätigungsmechanik zwischen einer Verstauposition und einer Einsatzposition bewegbar und in der Einsatzposition vor dem Sitzunterteil angeordnet ist, wobei die Fußstütze einen ersten, vom Sitzunterteil abgewandten Rand und einen zweiten, dem Sitzunterteil zugewandten Rand aufweist, ist erfindungsgemäß vorgesehen, dass eine linksseitige Betätigungsmechanik und eine rechtsseitige Betätigungsmechanik vorgesehen ist, die jeweils eine obere Führungsschiene aufweist, die in der Verstauposition und in der Einsatzposition vor dem Sitzunterteil angeordnet ist und sich vom Sitzunterteil weg erstreckt und die an ihrem sitznahen Ende relativ zur Fahrzeugstruktur oder relativ zum Sitzunterteil um eine dritte Querachse schwenkbar gelagert ist, dass die Fußstütze zumindest einen sich vom ersten Rand zum zweiten Rand erstreckenden Längsträger aufweist, dass der zumindest eine Längsträger im Bereich des ersten Randes mit einem ersten Führungselement der Betätigungsmechanik verbunden ist, das in der Führungsschiene längsverschiebbar geführt ist, dass der zumindest eine Längsträger im Bereich des zweiten Randes mit einem zur Betätigungsmechanik gehörenden Betätigungshebel um eine erste Querachse schwenkbar verbunden ist und dass der Betätigungshebel relativ zur Fahrzeugstruktur oder relativ zum Sitzunterteil um eine zweite Querachse schwenkbar gelagert und mittels einer Aktuatoreinrichtung um die zweite Querachse schwenkbar betätigbar ist, dass vor dem Sitzunterteil unterhalb der oberen Führungsschiene eine untere Führungsschiene angeordnet ist, die sich in Längsrichtung vom Sitzunterteil weg erstreckt, und dass ein Führungshebel vorgesehen ist, der im Bereich seines ersten Endes relativ zum Längsträger schwenkbar gekoppelt ist und der im Bereich seines zweiten Endes mit einem zweiten Führungselement versehen ist, das in der unteren Führungsschiene längsverschiebbar geführt ist.

Die erfindungsgemäße Fußauflage ist im eingefahrenen Zustand unter oder vor dem vorderen Bereich des Fahrzeugsitzes, insbesondere des Sitzunterteils, angeordnet. Über die Führungsschiene kann die Auflagefläche der Fußstütze weit in Fahrzeuglängsrichtung vom Fahrzeugsitz weg, beispielsweise nach vorne, gefahren in die Gebrauchsposition gebracht werden. Gemäß der Erfindung werden die Gewichtskräfte eines auf der Beinauflage abgelegten Beins von der sowohl in der Verstauposition als auch in der Einsatzposition vor dem Sitzunterteil angeordnete obere Führungsschiene über den Führungshebel in die untere Führungsschiene und von dort in die Fahrzeugstruktur eingeleitet.

Weitere bevorzugte und vorteilhafte Ausgestaltungsmerkmale des erfindungsgemäßen Fahrzeugsitzes sind Gegenstand der Unteransprüche 2 bis 6.

Von Vorteil ist es, wenn das in der oberen Führungsschiene längsverschiebbar angeordnete erste Führungselement mittels der von einem Antriebselement antreibbaren Aktuatoreinrichtung entlang der oberen Führungsschiene verfahrbar ist.

Die Längsverstellung der Auflagefläche kann so mittels der Aktuatoreinrichtung nicht-manuell erfolgen.

Vorzugsweise sind dabei das Antriebselement von einem Elektromotor und die Aktuatoreinrichtung von einem Spindelgetriebe gebildet. Dieses Spindelgetriebe verfügt bevorzugter Weise über einen Spindelantrieb mit einer vom Elektromotor drehend angetriebenen Spindel.

Dabei ist es besonders von Vorteil, wenn die untere Führungsschiene kürzer ist als die obere Führungsschiene, wobei das sitznahe Ende der unteren Führungsschiene weiter vom Sitzunterteil entfernt ist als das sitznahe Ende der oberen Führungsschiene. Diese Geometrie der Führungsschienen sorgt dafür, dass der Führungshebel beim Ausfahren der Fußstütze um eine Querachse verschwenkt wird und dadurch seinerseits die obere Führungsschiene verschwenkt und dabei das vordere, vom Sitzunterteil abgewandte Ende der Auflagefläche anhebt.

Ist der Betätigungshebel als Teleskopstange ausgebildet, die in ihrer Längserstreckung verstellbar ist, so lassen sich auf vorteilhafte Weise zusätzlich zur Verstellbarkeit mit dem Hebelgetriebe weitere Einstelloptionen für die Lage und die Neigung der Auflagefläche erzielen.

Vorteilhaft ist eine mit anderen Ausführungsformen der Erfindung kombinierbare Ausführungsform, bei der die Fußstütze an jeder ihrer beiden Längsseiten mit einem Längsträger und einer diesem zugeordneten Betätigungsmechanik versehen ist.

Die Erfindung ist auch gerichtet auf ein Fahrzeug, insbesondere auf ein Kraftfahrzeug, mit zumindest einem erfindungsgemäßen Fahrzeugsitz.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

Es zeigt:
- Fig. 1A: eine Seitenansicht eines schematisch dargestellten Fahrzeugsitzes mit einer erfindungsgemäßen Fußstütze in einer Verstauposition,
- Fig. 1 B: den Fahrzeugsitz aus Fig. 1A mit der vollständig ausgefahrenen Fußstütze in ihrer Einsatzposition und
- Fig. 2: eine Draufsicht auf den schematisch dargestellten Fahrzeugsitz aus Fig. 1B bei vollständig ausgefahrener Fußstütze.

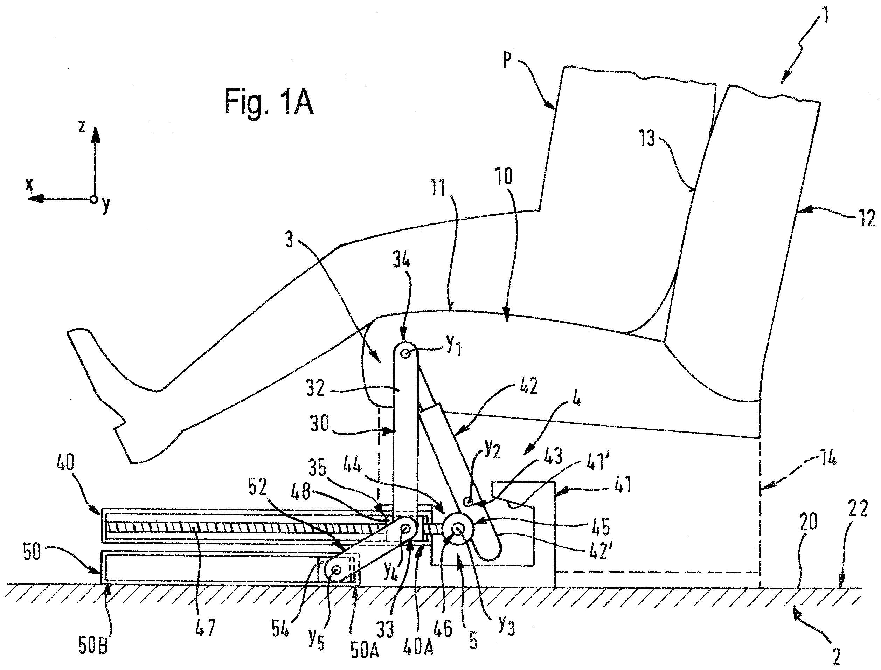

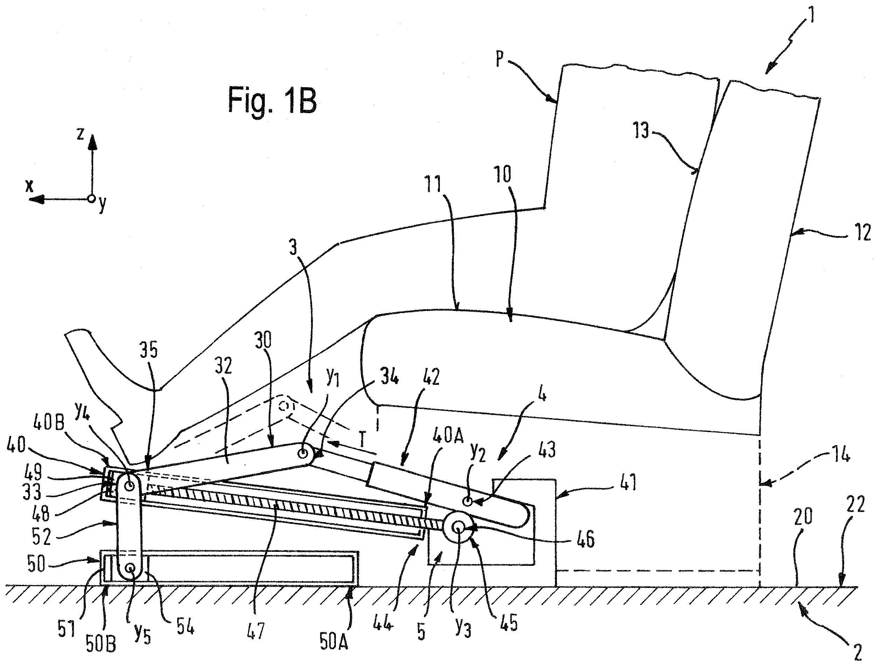

Fig. 1A und Fig. 1B zeigen in schematischer Darstellung einen Fahrzeugsitz 1 von der linken Seite mit einem eine Sitzfläche 11 aufweisenden Sitzunterteil 10 und einer üblicherweise neigbar daran angebrachten Sitzlehne 12, die eine Lehnenfläche 13 aufweist. Ein auf dem Fahrzeugsitz 1 sitzender Passagier P ist ebenfalls schematisch dargestellt. Der Fahrzeugsitz ist über eine an sich bekannte und in der Figur nur gestrichelt schematisch dargestellte Sitzkonsole 14 auf dem Innenraumboden 20 der Fahrzeugstruktur 22 eines Fahrzeugs 2, vorzugsweise längsverschiebbar, angebracht. Der Fahrzeugsitz 1 kann ein Einzelsitz sein oder er kann Teil einer Sitzbank sein.

Dem Fahrzeugsitz 1 ist eine Fußstütze 3 zugeordnet, die in nachstehend beschriebener Weise am Sitzunterteil 10, an der Sitzkonsole 14 oder - bevorzugt - auf dem Innenraumboden 20 des Fahrzeugs 2 angeordnet ist. Die Fußstütze 3 weist eine Stütztafel 30 mit einer oberen Auflagefläche 31 und zwei seitlichen Längsträgern 32, 32' auf, die an den beiden voneinander abgewandten Längsseiten der Stütztafel 30 mit dieser verbunden sind und die sich von einem ersten, vom Sitzunterteil 10 abgewandten Rand 33 und einem zweiten, dem Sitzunterteil 10 zugewandten Rand 34 erstrecken.

Die Fußstütze 3 ist, wie es nachstehend noch beschrieben wird, zwischen einer Verstauposition unter dem Sitzunterteil 10 und der in Fig. 1BC dargestellten Einsatzposition bewegbar, in der die Stütztafel 30 der Fußstütze 3 vor dem Sitzunterteil 10 angeordnet ist.

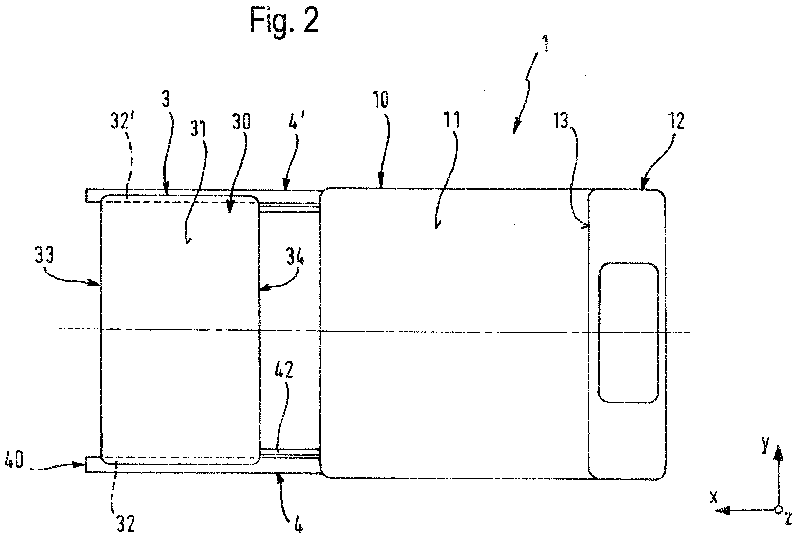

Nachstehend wird eine in Fig. 1 gezeigte linksseitige Betätigungsmechanik 4 beschrieben, mittels der die Stütztafel 30 der Fußstütze 3 aus der Verstauposition in die Einsatzposition ausfahrbar und wieder zurück in die Verstauposition einfahrbar ist. Wie es in Fig. 2 zu sehen ist, ist auch eine rechtsseitige Betätigungsmechanik 4' vorgesehen, die in der gleichen Weise aufgebaut ist wie die linksseitige Betätigungsmechanik 4, so dass die diesbezüglichen nachstehenden Ausführungen sinngemäß auch für die rechtsseitige Betätigungsmechanik 4' gelten, weshalb hier nur die linksseitige Betätigungsmechanik beschrieben wird. Die beiden Betätigungsmechaniken 4, 4' arbeiten synchron und sind vorzugsweise von einer gemeinsamen Antriebseinrichtung 5 angetrieben.

Der Längsträger 32 im Bereich des ersten Randes 33 mit einem ersten Führungselement 35 verbunden, das in einer vor dem Sitzunterteil 10 angeordneten und sich vom Sitzunterteil 10 weg erstreckenden oberen Führungsschiene 40 der Betätigungsmechanik 4 längsverschiebbar geführt ist. Der Längsträger 32 ist im Bereich des zweiten Randes 34 mit einem zur Betätigungsmechanik 4 gehörenden Betätigungshebel 42 um eine erste Querachse y₁ schwenkbar verbunden. Der Betätigungshebel 42 ist relativ zur Fahrzeugstruktur 22 oder relativ zum Sitzunterteil 10 um eine zweite Querachse y₂ schwenkbar gelagert und in der weiter unten beschriebenen Weise mittels einer von einem Antriebselement 45 antreibbaren Aktuatoreinrichtung 44 um die zweite Querachse y₂ schwenkbar betätigbar. Dazu ist im gezeigten Beispiel ein mit der Fahrzeugstruktur 22 verbundener Lagerbock 41 vorgesehen, an dem ein die zweite Querachse y₂ bestimmendes erstes fahrzeugfestes Lager 43 zur Schwenklagerung des Betätigungshebels 42 ausgebildet ist. Der Betätigungshebel 42 ist vorzugsweise als Teleskopstange ausgebildet ist, die in ihrer Längserstreckung verstellbar ist. Dadurch lässt sich der Abstand zwischen den beiden Schwenkachsen bildenden Querachsen y₁ und y₂ vergrößern oder verkleinern, wodurch zusätzliche Einstellmöglichkeiten für die Position und die Neigung der Stütztafel 30 und damit der Auflagefläche 31 geschaffen werden. Auch das Antriebselement 45 für die Aktuatoreinrichtung 44 ist im oder am Lagerbock 41 angebracht. Außerdem ist am Lagerbock 41 ein zweites fahrzeugfestes Lager 46 vorgesehen, das eine dritte Querachse y₃ bestimmt und in dem das sitznahen Ende 40A der oberen Führungsschiene 40 relativ zur Fahrzeugstruktur 22 schwenkbar gelagert ist.

Die Aktuatoreinrichtung 44 weist eine in oder neben der Führungsschiene 40 und parallel zu dieser verlaufende Spindelwelle 47, die vom Antriebselement 45 rotatorisch antreibbar ist, sowie eine Spindelmutter 48 auf, die mit der Spindelwelle 47 im Gewindeeingriff steht. Im gezeigten Beispiel ist die Spindelmutter 48 mit dem ersten Führungselement 35 verbunden oder integral in diesem ausgebildet. Die Spindelwelle 47 und die Spindelmutter 48 bilden folglich ein Spindelgetriebe. Das auf diese Weise in der Führungsschiene 40 längsverschiebbar angeordnete erste Führungselement 35 ist so, vom Antriebselement 45 angetrieben, entlang der oberen Führungsschiene 40 verfahrbar. Dabei ist das Antriebselement 45 bevorzugt von einem Elektromotor gebildet.

Unterhalb der oberen Führungsschiene 40 ist vor dem Sitzunterteil 10 eine untere Führungsschiene 50 angeordnet ist, die sich in Längsrichtung X vom Sitzunterteil 10 weg und parallel zur oberen Führungsschiene 40 erstreckt. Ein Führungshebel 52 ist im Bereich seines ersten Endes mit dem ersten Führungselement 35 um eine vierte Querachse y₄ schwenkbar verbunden und so relativ zum Längsträger 32 schwenkbar mit diesem gekoppelt. Im Bereich seines zweiten Endes ist der Führungshebel 52 mit einem zweiten Führungselement 54 versehen, das in der unteren Führungsschiene 50 längsverschiebbar geführt ist. Die untere Führungsschiene 50 ist kürzer als die obere Führungsschiene 40, wobei das sitznahe Ende 50A der unteren Führungsschiene 50 weiter vom Sitzunterteil 10 entfernt ist als das sitznahe Ende 40A der oberen Führungsschiene 40.

Wenn das erste Führungselement 35 mittels der Spindelwelle 47 aus der Verstauposition nach vorne, also vom Sitzunterteil 10 weg, gefahren wird, nimmt es den ersten (vorderen) Rand 33 der Stütztafel 30 mit, wobei die Stütztafel 30 um die vierte Querachse y₄ im Uhrzeigersinn verschwenkt wird. Gleichzeitig findet eine Relativverschwenkung zwischen der Stütztafel 30 und dem Betätigungshebel 42 um die erste Querachse y₁ statt, durch die mit fortschreitendem Nach-Vorne-Fahren des Führungselements 35 der Betätigungshebel 42 um die zweite Querachse y₂ entgegen dem Uhrzeigersinn verschwenkt wird bis der von der Querachse y₁ abgewandte Endabschnitt 42' des Betätigungshebels 42 an einer inneren unteren Anschlagfläche 41' des Lagerbocks 41 anliegt. Da die untere Führungsschiene 50 in der oben beschriebenen Weise kürzer ist als die obere Führungsschiene 40, ist der Führungshebel 52 in der in Fig. 1A gezeigten Verstauposition von oben nach unten vom Sitzunterteil 10 weg gerichtet geneigt. Diese Neigung führt dazu, dass das in der unteren Führungsschiene geführte zweite Führungselement 54 den Endanschlag 51 am vorderen, sitzfernen Ende 50B der unteren Führungsschiene 50 erreicht, bevor das erste Führungselement 35 den Endanschlag 49 am vorderen, sitzfernen Ende 40B der oberen Führungsschiene 40 erreicht. Wir der das erste Führungselement 35 mittels der Spindelwelle 47 weiter vom Sitzunterteil 10 weg verfahren, so schwenkt der Führungshebel 52 um eine vom zweiten Führungselement 54 gebildete fünfte Querachse ys entgegen dem Uhrzeigersinn und hebt dabei das vordere Ende 40B der oberen Führungsschiene 40 an. Die obere Führungsschiene schwenkt dabei im Uhrzeigersinn um die dritte Querachse y₃ und hebt gleichzeitig den vorderen, sitzabgewandten Rand 33 der Stütztafel 30 nach oben an. Wird in dieser Einsatzposition noch der teleskopartige Betätigungshebel 42 ausgefahren, das heißt der Abstand zwischen den Querachsen y₁ und y₂ verlängert, wie es in Fig. 1B durch den Pfeil T und die gestrichelte Darstellung symbolisch dargestellt ist, so schwenkt die Stütztafel 30 um die Querachse y4 entgegen dem Uhrzeigersinn und es verändert sich der Neigungswinkel der Stütztafel 30 und damit auch der oberen Auflagefläche 31 der Fußstütze 3. Beim Zurückfahren der Fußstütze 3 aus der Einsatzposition (Fig. 1B) in die Verstauposition (Fig. 1A) erfolgen die vorstehend beschriebenen Bewegungen jeweils in der entgegengesetzten Richtung.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeugsitz
- 2: Fahrzeug
- 3: Fußstütze
- 4: linksseitige Betätigungsmechanik
- 4': rechtsseitige Betätigungsmechanik
- 5: Antriebseinrichtung
- 10: Sitzunterteil
- 11: Sitzfläche
- 12: Sitzlehne
- 13: Lehnenfläche
- 14: Sitzkonsole
- 20: Innenraumboden
- 22: Fahrzeugstruktur
- 30: Stütztafel
- 31: obere Auflagefläche
- 32: Längsträger
- 32': Längsträger
- 33: abgewandter Rand
- 34: zugewandter Rand
- 35: erstes Führungselement
- 40: obere Führungsschiene
- 40A: sitznahes Ende von 40
- 40B: sitzfernes Ende von 40
- 41: Lagerbock
- 41': innere untere Anschlagfläche von 41
- 42: Betätigungshebel
- 42': unterer Endabschnitt von 42
- 43: erstes feuerfestes Lager
- 44: Aktuatoreinrichtung
- 45: Antriebselement
- 46: zweites fahrzeugfestes Lager
- 47: Spindelwelle
- 48: Spindelmutter
- 49: vorderer, sitzferner Endanschlag von 40
- 50: untere Führungsschiene
- 50A: sitznahes Ende von 50
- 50B: sitzfernes Ende von 50
- 51: vorderer, sitzferner Endanschlag von 50
- 52: Führungshebel
- 54: zweites Führungselement

- P: Passagier
- y₁: erste Querachse
- y₂: zweite Querachse
- y₃: dritte Querachse
- y₄: vierte Querachse
- y₅: fünfte Querachse

## Patentansprüche

1. Fahrzeugsitz mit einer Fußstütze (3), einem eine Sitzfläche (11) aufweisenden Sitzunterteil (10), das, vorzugsweise längsverschiebbar, mit einer Fahrzeugstruktur (22) koppelbar oder gekoppelt ist, und einer eine Lehnenfläche (13) aufweisenden Sitzlehne (12), wobei die mit einer Auflagefläche (31) versehene Fußstütze (3) mittels einer Betätigungsmechanik (4, 4') zwischen einer Verstauposition und einer Einsatzposition bewegbar und in der Einsatzposition vor dem Sitzunterteil (10) angeordnet ist,
wobei die Fußstütze (3) einen ersten, vom Sitzunterteil (10) abgewandten Rand (33) und einen zweiten, dem Sitzunterteil (10) zugewandten Rand (34) aufweist,
**dadurch gekennzeichnet,**
**dass** eine linksseitige Betätigungsmechanik (4) und eine rechtsseitige Betätigungsmechanik (4') vorgesehen ist, die jeweils eine obere Führungsschiene (40) aufweist, die in der Verstauposition und in der Einsatzposition vor dem Sitzunterteil (10) angeordnet ist und sich vom Sitzunterteil (10) weg erstreckt und die an ihrem sitznahen Ende (40A) relativ zur Fahrzeugstruktur (22) oder relativ zum Sitzunterteil (10) um eine dritte Querachse (y₃) schwenkbar gelagert ist,
**dass** die Fußstütze (3) zumindest einen sich vom ersten Rand (33) zum zweiten Rand (34) erstreckenden Längsträger (32, 32') aufweist,
**dass** der zumindest eine Längsträger (32, 32') im Bereich des ersten Randes (33) mit einem ersten Führungselement (35) der Betätigungsmechanik (4, 4') verbunden ist, das in der Führungsschiene (40) längsverschiebbar geführt ist,
**dass** der zumindest eine Längsträger (32, 32') im Bereich des zweiten Randes (34) mit einem zur Betätigungsmechanik (4) gehörenden Betätigungshebel (42) um eine erste Querachse (y₁) schwenkbar verbunden ist und
**dass** der Betätigungshebel (42) relativ zur Fahrzeugstruktur (22) oder relativ zum Sitzunterteil (10) um eine zweite Querachse (y₂) schwenkbar gelagert und mittels einer Aktuatoreinrichtung (44) um die zweite Querachse (y₂) schwenkbar betätigbar ist,
**dass** vor dem Sitzunterteil (10) unterhalb der oberen Führungsschiene (40) eine untere Führungsschiene (50) angeordnet ist, die sich in Längsrichtung (X) vom Sitzunterteil (10) weg erstreckt, und
**dass** ein Führungshebel (52) vorgesehen ist, der im Bereich seines ersten Endes relativ zum Längsträger (32, 32') schwenkbar gekoppelt ist und der im Bereich seines zweiten Endes mit einem zweiten Führungselement (54) versehen ist, das in der unteren Führungsschiene (50) längsverschiebbar geführt ist.

2. Fahrzeugsitz mit einer Fußstütze nach Anspruch 1,
**dadurch gekennzeichnet,**
**dass** das in der oberen Führungsschiene (40) längsverschiebbar angeordnete erste Führungselement (35) mittels der von einem Antriebselement (45) antreibbaren Aktuatoreinrichtung (44) entlang der oberen Führungsschiene (40) verfahrbar ist.

3. Fahrzeugsitz mit einer Fußstütze nach Anspruch 2,
**dadurch gekennzeichnet,**
**dass** das Antriebselement (45) von einem Elektromotor und die Aktuatoreinrichtung (44) von einem Spindelgetriebe gebildet sind.

4. Fahrzeugsitz mit einer Fußstütze nach einem der vorhergehenden Ansprüche,
**dadurch gekennzeichnet,**
**dass** die untere Führungsschiene (50) kürzer ist als die obere Führungsschiene (40), wobei das sitznahe Ende (50A) der unteren Führungsschiene (50) weiter vom Sitzunterteil (12) entfernt ist als das sitznahe Ende (40A) der oberen Führungsschiene (40).

5. Fahrzeugsitz mit einer Fußstütze nach einem der vorhergehenden Ansprüche,
**dadurch gekennzeichnet,**
**dass** der Betätigungshebel (42) als Teleskopstange ausgebildet ist, die in ihrer Längserstreckung verstellbar ist.

6. Fahrzeugsitz mit einer Fußstütze nach einem der vorhergehenden Ansprüche,
**dadurch gekennzeichnet,**
**dass** die Fußstütze (3) an jeder ihrer beiden Längsseiten mit einem Längsträger (32, 32') und einer diesem zugeordneten Betätigungsmechanik (4, 4') versehen ist.

7. Fahrzeug, insbesondere Kraftfahrzeug, mit zumindest einem Fahrzeugsitz (1) nach einem der vorhergehenden Ansprüche.

## Claims

1. Vehicle seat with a footrest (3), a seat base (10) having a seat surface (11) that can be or is coupled, preferably longitudinally displaceably, with a vehicle structure (22), and a seat backrest (12) having a backrest surface (13), wherein the footrest (3) provided with a support surface (31) is movable by means of an actuation mechanism (4, 4') between a stowed position and a deployment position and is arranged in the deployment position in front of the seat base (10),
wherein the footrest (3) has a first edge (33) facing away from the seat base (10) and a second edge (34) facing the seat base (10),
**characterized in that**
a left-side actuation mechanism (4) and a right-side actuation mechanism (4') are provided, each having an upper guide rail (40) which is arranged in the stowed position and in the deployment position in front of the seat base (10) and extends away from the seat base (10) and which is pivotally mounted at its seat-proximal end (40A) relative to the vehicle structure (22) or relative to the seat base (10) about a third transverse axis (y3),
that the footrest (3) has at least one longitudinal support (32, 32') extending from the first edge (33) to the second edge (34),
that the at least one longitudinal support (32, 32') is connected in the region of the first edge (33) to a first guide element (35) of the actuation mechanism (4, 4') which is longitudinally displaceably guided in the guide rail (40),
that the at least one longitudinal support (32, 32') is pivotally connected in the region of the second edge (34) to an actuation lever (42) belonging to the actuation mechanism (4) about a first transverse axis (y1) and
that the actuation lever (42) is pivotally mounted relative to the vehicle structure (22) or relative to the seat base (10) about a second transverse axis (y2) and can be pivotally actuated about the second transverse axis (y2) by means of an actuator device (44),
that a lower guide rail (50) is arranged in front of the seat base (10) below the upper guide rail (40), which extends in the longitudinal direction (X) away from the seat base (10), and
that a guide lever (52) is provided which is pivotally coupled to the longitudinal support (32, 32') in the region of its first end and which is provided in the region of its second end with a second guide element (54) which is longitudinally displaceably guided in the lower guide rail (50).

2. Vehicle seat with a footrest according to claim 1,
**characterized in that**
the first guide element (35) arranged longitudinally displaceably in the upper guide rail (40) is movable along the upper guide rail (40) by means of the actuator device (44) which can be driven by a drive element (45).

3. Vehicle seat with a footrest according to claim 2,
**characterized in that**
the drive element (45) is formed by an electric motor and the actuator device (44) is formed by a spindle gear.

4. Vehicle seat with a footrest according to one of the preceding claims,
**characterized in that**
the lower guide rail (50) is shorter than the upper guide rail (40), wherein the seat-proximal end (50A) of the lower guide rail (50) is further away from the seat base (12) than the seat-proximal end (40A) of the upper guide rail (40).

5. Vehicle seat with a footrest according to one of the preceding claims,
**characterized in that**
the actuation lever (42) is designed as a telescopic rod which is adjustable in its longitudinal extension.

6. Vehicle seat with a footrest according to one of the preceding claims,
**characterized in that**
the footrest (3) is provided on each of its two longitudinal sides with a longitudinal support (32, 32') and an associated actuation mechanism (4, 4').

7. Vehicle, in particular motor vehicle, with at least one vehicle seat (1) according to one of the preceding claims.

## Revendications

1. Siège de véhicule avec un repose-pieds (3), une partie inférieure de siège (10) présentant une surface d'assise (11), qui peut être couplée ou est couplée, de préférence de manière coulissante longitudinalement, à une structure de véhicule (22), et **un** dossier de siège (12) présentant une surface de dossier (13), dans lequel le repose-pieds (3) pourvu d'une surface d'appui (31) est mobile au moyen d'un mécanisme d'actionnement (4, 4') entre une position de rangement et une position d'utilisation et est disposé dans la position d'utilisation devant la partie inférieure du siège (10),
dans lequel le repose-pieds (3) présente un premier bord (33) éloigné de la partie inférieure du siège (10) et **un** deuxième bord (34) tourné vers la partie inférieure du siège (10),
**caractérisé en ce**
**qu'**un mécanisme d'actionnement du côté gauche (4) et un mécanisme d'actionnement du côté droit (4') sont prévus, chacun ayant un rail de guidage supérieur (40), qui est disposé dans la position de rangement et dans la position d'utilisation devant la partie inférieure du siège (10) et s'étend à l'écart de la partie inférieure du siège (10) et qui est monté pivotant à son extrémité proche du siège (40A) par rapport à la structure du véhicule (22) ou par rapport à la partie inférieure du siège (10) autour d'un troisième axe transversal (y3),
**que** le repose-pieds (3) présente au moins **un** support longitudinal (32, 32') s'étendant du premier bord (33) au deuxième bord (34),
**que** le au moins un support longitudinal (32, 32') est relié dans la région du premier bord (33) à **un** premier élément de guidage (35) du mécanisme d'actionnement (4, 4'), qui est guidé de manière coulissante longitudinalement dans le rail de guidage (40),
**que** le au moins un support longitudinal (32, 32') est relié de manière pivotante dans la région du deuxième bord (34) à **un** levier d'actionnement (42) appartenant au mécanisme d'actionnement (4) autour d'un premier axe transversal (y1), et
**que** le levier d'actionnement (42) est monté de manière pivotante par rapport à la structure du véhicule (22) ou par rapport à la partie inférieure du siège (10) autour d'un deuxième axe transversal (y2) et peut être actionné de manière pivotante autour du deuxième axe transversal (y2) au moyen d'un dispositif d'actionnement (44), qu'un rail de guidage inférieur (50) est disposé devant la partie inférieure du siège (10) en dessous du rail de guidage supérieur (40), s'étendant dans la direction longitudinale (X) à l'écart de la partie inférieure du siège (10), et
**qu'**un levier de guidage (52) est prévu, qui est couplé de manière pivotante par rapport au support longitudinal (32, 32') dans la région de sa première extrémité et qui est pourvu dans la région de sa deuxième extrémité d'un deuxième élément de guidage (54) qui est guidé de manière coulissante longitudinalement dans le rail de guidage inférieur (50).

2. Siège de véhicule avec un repose-pieds selon la revendication 1,
**caractérisé en ce**
**que** le premier élément de guidage (35) disposé de manière coulissante longitudinalement dans le rail de guidage supérieur (40) est mobile le long du rail de guidage supérieur (40) au moyen du dispositif d'actionnement (44) pouvant être entraîné par un élément d'entraînement (45).

3. Siège de véhicule avec un repose-pieds selon la revendication 2,
**caractérisé en ce**
**que** l'élément d'entraînement (45) est formé par un moteur électrique et le dispositif d'actionnement (44) est formé par un engrenage à vis sans fin.

4. Siège de véhicule avec un repose-pieds selon l'une des revendications précédentes, **caractérisé en ce**
**que** le rail de guidage inférieur (50) est plus court que le rail de guidage supérieur (40), où l'extrémité proche du siège (50A) du rail de guidage inférieur (50) est plus éloignée de la partie inférieure du siège (12) que l'extrémité proche du siège (40A) du rail de guidage supérieur (40).

5. Siège de véhicule avec un repose-pieds selon l'une des revendications précédentes, **caractérisé en ce**
**que** le levier d'actionnement (42) est conçu comme une tige télescopique qui est réglable dans son extension longitudinale.

6. Siège de véhicule avec un repose-pieds selon l'une des revendications précédentes, **caractérisé en ce**
**que** le repose-pieds (3) est pourvu sur chacun de ses deux côtés longitudinaux d'un support longitudinal (32, 32') et d'un mécanisme d'actionnement associé (4, 4').

7. Véhicule, en particulier véhicule automobile, avec au moins un siège de véhicule (1) selon l'une des revendications précédentes.
